# FASCICULE DE BREVET EUROPEEN

(11) **EP 3 981 057 B1**
(45) Date de publication et mention de la délivrance du brevet: **28.06.2023**
(21) Numéro de dépôt: 20731803.1
(22) Date de dépôt: 27.05.2020
(51) Int. Cl.: H02J 7/00

(54) **PROCEDE D'IDENTIFICATION D'UNE BATTERIE ELECTRIQUE**
VERFAHREN ZUR IDENTIFIZIERUNG EINER ELEKTRISCHEN BATTERIE
METHOD FOR IDENTIFYING AN ELECTRIC BATTERY

(30) Priorité: 06.06.2019 FR 1906025
(43) Date de publication de la demande: 13.04.2022
(73) Titulaire: Blue Solutions, 29500 Ergué Gabéric (FR)
(72) Inventeur: HINGANT, Dominique, 29140 Saint Yvi (FR)
(74) Mandataire: IPAZ
(86) Numéro de dépôt international: PCT/EP2020/064617
(87) Numéro de publication internationale: WO 2020/244975

(56) Documents cités:
- EP-A2- 0 904 622
- EP-B1- 0 904 622
- US-A1- 2016 096 444
- US-B1- 6 236 186
- "BATTERY TYPE INDICATOR", IBM TECHNICAL DISCLOSURE BULLETIN, INTERNATIONAL BUSINESS MACHINES CORP. (THORNWOOD), US, vol. 35, no. 4A, 30 septembre 1992 (1992-09-30), pages 449-450, XP000314829, ISSN: 0018-8689

## Description

La présente invention concerne un procédé d'identification d'une batterie électrique, en particulier au sein d'un système comprenant un bus de communication, par exemple numérique, relié à ladite batterie. Elle concerne également une batterie pouvant être identifiée par le procédé selon l'invention, et un système, un véhicule, et une installation comprenant de telles batteries.

Le domaine de l'invention le domaine de l'identification des batteries électriques se trouvant dans un réseau, en particulier numérique, en particulier au sein d'un véhicule électrique, ou d'une installation électrique.

### Etat de la technique

Un véhicule électrique comprend généralement une pluralité de batteries rechargeables alimentant le moteur électrique dudit véhicule. Le nombre de batteries est déterminé en fonction de la puissance et de l'autonomie souhaitées pour le véhicule.

Au sein du véhicule, chaque batterie peut être connectée à un bus de communication, par exemple de type CAN : dans ce cas chaque batterie du véhicule doit avoir un identifiant informatique. Il est aussi indispensable de pouvoir déterminer l'emplacement de chaque batterie au sein du véhicule pour pouvoir intervenir sur ladite batterie, en cas de besoin. Or, l'identifiant de la batterie n'indique pas forcément son emplacement dans le véhicule, et vice versa, ce qui est problématique.

Pour pallier cet inconvénient, l'emplacement d'une batterie au sein du véhicule est prédéterminé en usine. Ainsi, chaque batterie se voit attribué un emplacement, en sortie d'usine et avant son installation dans le véhicule. Cette solution vient compliquer la gestion des batteries en usine, mais aussi côté véhicule, et ne permet aucune flexibilité lors de l'utilisation des batteries. Par exemple, il n'est pas possible d'utiliser une batterie dans un emplacement autre que celui qui lui été attribué en usine.

Un but de la présente invention est de remédier à au moins un de ces inconvénients.

Un autre but de l'invention est de proposer un procédé d'identification d'une batterie électrique permettant de simplifier la gestion de batteries, côté production mais aussi côté utilisation.

Il est aussi un but de l'invention de proposer un procédé d'identification permettant une utilisation plus simple et plus flexible d'une batterie électrique.

On notera enfin les documents de l'Art antérieur US 2016/096444 A1 et "BATTERY TYPE INDICATOR", IBM TECHNICAL DISCLOSURE BULLETIN, INTERNATIONAL BUSINESS MACHINES CORP. (THORNWOOD), US, vol. 35, no. 4A, 30 septembre 1992 (1992-09-30), pages 449-450, XP000314829, ISSN: 0018-8689. En particulier le document US 2016/096444 A1 divulgue le préambule de la revendication indépendante 1.

### Exposé de l'invention

L'invention permet d'atteindre au moins l'un de ces buts par un procédé d'identification d'une batterie électrique munie d'une interface électrique, dite d'identification, comportant plusieurs broches, dites d'identification, l'une au moins desdites broches d'identification pouvant être reliée à au moins une autre desdites broches d'identification pour attribuer un identifiant à ladite batterie, ledit procédé comprenant une étape de lecture dudit identifiant comprenant les opérations suivantes réalisées, à tour de rôle, pour chacune desdites broches d'identification :
- polarisation de ladite broche d'identification à un potentiel électrique prédéterminé, dit potentiel de test ; et
- détection de la présence, ou non, dudit potentiel de test sur chacune des autres broches d'identification ;
en vue d'identifier les broches d'identification qui sont rebouclées entre-elles au sein de ladite interface d'identification.

Ainsi, l'invention propose d'utiliser, pour une batterie électrique, une interface d'identification comprenant plusieurs broches d'identification, et d'attribuer un identifiant, en particulier numérique, à ladite batterie en fonction d'une liaison ou non, entre-elles, desdites broches d'identification, en entrée de l'interface d'identification, cette ou ces liaison(s) étant ensuite détectée(s) en testant individuellement chaque broche d'identification avec un potentiel électrique de test. Les broches d'identification étant prévues au niveau d'une interface électrique il est possible de modifier à souhait la connexion desdites broches entre-elles, en entrée de ladite interface. Ce faisant, il est possible de modifier ou d'attribuer, ou encore d'imposer, à souhait, un identifiant à la batterie électrique, et ce en fonction des besoins et/ou d'une configuration d'utilisation.

Le procédé selon l'invention permet donc de modifier ou d'attribuer ou encore d'imposer, à souhait, un identifiant, en particulier numérique, à toute batterie électrique. Ainsi, l'invention permet de simplifier la gestion de batteries électriques, côté fabrication et côté utilisation. De plus, l'invention permet une plus grande flexibilité d'utilisation des batteries électrique.

Dans la présente demande, par « batterie » ou « batterie électrique » on entend :
- un ensemble de stockage d'énergie électrique comprenant des dispositifs de stockage d'énergie électrique de même nature, tels que par exemple des accumulateurs électrochimiques par effet capacitif ; et
- une électronique de gestion dudit ensemble de stockage.

Préférentiellement, suivant un mode de réalisation particulier mais nullement limitatif, le potentiel de test peut correspondre à un niveau de tension correspondant à une des deux valeurs d'un bit numérique, c'est-à-dire soit à un premier niveau de tension correspondant un « 1 » numérique, soit un deuxième niveau de tension correspondant un « 0 » numérique. Dans ce cas, le potentiel électrique utilisé en l'absence du potentiel de test peut correspondre à un niveau de tension correspondant à l'autre des deux valeurs d'un bit numérique.

Selon un exemple de réalisation nullement limitatif, le premier niveau de tension, correspondant à un « 1 » numérique, peut être de l'ordre de, ou égal à, 3.3V. Le deuxième niveau de tension peut être de l'ordre de, ou égal à, 0V. Bien entendu, il est possible d'adopter d'autres niveaux de tension que ceux indiqués ci-dessus. Par exemple, il est possible d'adopter l'inverse des niveaux indiqués ci-dessus : 3.3V pour un « 0 » binaire et 0V pour un « 1 » binaire.

Suivant un mode de réalisation alternatif, il est possible d'utiliser un potentiel de test ne correspondant pas à un niveau de tension associé à une valeur d'un bit numérique.

Préférentiellement, le procédé selon l'invention peut en outre comprendre une étape d'attribution d'un identifiant à la batterie électrique par rebouclage d'au moins une desdites broches d'identification avec au moins une autre desdites broches d'identification, préalablement à l'étape de lecture.

Cette étape d'attribution peut être réalisée avant la première utilisation de la batterie.

Cette étape d'attribution peut ensuite être répétée au tant de fois que souhaité, par exemple pour modifier l'identifiant de la batterie en cours d'utilisation.

Il est a noté que, cette étape d'attribution n'est pas obligatoirement réalisée pour toutes les batteries. En particulier, lorsqu'une batterie se voit attribué un identifiant correspondant à aucun rebouclage entre les broches d'identification, alors cette étape d'attribution n'est pas réalisée. Dans toutes les autres configurations dans lesquelles au moins une broche d'identification est rebouclée avec une autre broche d'identification, alors l'étape d'attribution est réalisée au moins une fois.

Suivant un exemple de réalisation, le potentiel de test peut être un potentiel électrique différent d'un potentiel de masse de la batterie électrique.

Le potentiel de test peut être, ou être obtenu à partir de, un potentiel fourni au sein de la batterie. Pour ce faire, la batterie électrique peut comprendre une source électrique, ou une électronique, fournissant ledit potentiel.

Alternativement, le potentiel de test peut être, ou être obtenu à partir de, un potentiel reçu au niveau de l'interface d'identification, par exemple un potentiel fourni par un bus de communication.

Suivant un exemple de réalisation, le potentiel de test peut être un potentiel de masse électrique utilisé au sein de la batterie.

Un tel potentiel de masse électrique peut être le potentiel de masse électrique utilisé pour l'électronique de la batterie.

Un tel potentiel de masse électronique peut être le potentiel nul.

Lorsqu'une broche est polarisée au potentiel de test, au moins une, en particulier chacune, des autres broches d'identification peut être :
- polarisé à un potentiel différent du potentiel de test ;
- non polarisé à un quelconque potentiel électrique, c'est-à-dire laissé « en l'air ».

Suivant un autre aspect de la présente invention, il est proposé une batterie électrique, en particulier rechargeable, comprenant :
- une interface électrique (102), dite d'identification, comportant plusieurs broches (104₁-104₅), dites d'identification, l'une au moins desdites broches d'identification pouvant être reliée à au moins une autre desdites broches d'identification pour attribuer un identifiant à ladite batterie ; et
- au moins une électronique, dite de lecture, agencée pour mettre en oeuvre l'étape de lecture du procédé selon l'invention.

Avantageusement, la batterie selon l'invention peut comprendre en outre au moins un moyen de rebouclage électrique d'au moins une broche d'identification avec au moins une autre broche d'identification.

Il est à noter qu'un tel moyen de rebouclage n'est pas obligatoirement existant dans toutes les batteries. En particulier, une batterie dont l'identifiant correspond à une configuration dans laquelle il n'existe aucun rebouclage entre les broches d'identification, ne comporte pas un tel moyen de rebouclage.

Toutes les autres batteries comprennent, au moins un moyen de rebouclage.

Avantageusement, au moins un moyen de rebouclage peut être démontable, en particulier sans dégrader l'interface d'identification, ou amovible, en particulier sans utilisation d'outil.

Le moyen de rebouclage peut être un connecteur galvanique, rigide ou non, qui vient relier au moins deux broches d'identification.

Le moyen de rebouclage peut par exemple se présenter sous la forme d'un connecteur enfichable avec l'interface d'identification.

Préférentiellement, l'électronique de lecture peut être un microprocesseur, ou une puce électronique, relié(e) aux broches d'identification, et programmé pour réaliser l'étape de lecture.

Plus généralement, l'électronique de lecture peut être tout composant électronique, ou toute carte électronique comprenant des composants numériques et/ou des composants analogiques, configuré(e) pour réaliser l'étape de lecture.

La batterie selon l'invention peut comprendre une table de correspondance indiquant pour chaque configuration de liaison(s) de broches, une donnée d'identification.

Une telle table de correspondance peut être fixée à la batterie, ou inscrite sur une surface de la batterie, ou encore fournie sur un support indépendant de la batterie.

Une telle table de correspondance peut être mémorisée dans une mémoire faisant partie de l'électronique de lecture, ou pouvant être lue par l'électronique de lecture. Ainsi, cette dernière peut lire cet identifiant en fonction de la combinaison de rebouclage(s) qu'elle a préalablement détectée.

Suivant un exemple de réalisation particulièrement préféré, les broches d'identification, et plus généralement l'interface d'identification, peu(ven)t être positionnée(s) de sorte à être accessible à l'utilisateur, et en particulier sur une face externe de la batterie.

Ainsi, la batterie selon l'invention permet à l'utilisateur de modifier le rebouclage des broches d'identification, et donc l'identifiant de la batterie, à tout moment.

L'interface d'identification peut se présenter sous la forme d'une interface indépendante de toute autre interface.

L'interface d'identification peut en particulier se présenter sous la forme d'un connecteur indépendant.

Dans ce cas, l'interface d'indentification peut ne réaliser aucune autre fonction que l'identification de la batterie.

Alternativement, l'interface d'identification peut être intégrée dans une interface existante équipant la batterie, et en particulier dans un connecteur existant équipant la batterie.

Une telle interface peut par exemple être une interface de communication de la batterie.

Dans ce cas, concrètement, plusieurs broches de ladite interface existante sont utilisées comme broches d'identification.

Suivant un autre aspect de la présente invention, il est proposé un système comprenant :
- un bus de communication, en particulier numérique ; et
- au moins une batterie électrique selon l'invention, reliée audit bus de communication.

Les batteries peuvent réaliser une même fonction, ou des fonctions différentes.

Les batteries peuvent être identiques ou différentes, de même technologies de stockage ou de technologies de stockage différentes.

Préférentiellement, au moins une batterie est rechargeable.

Suivant un autre aspect de la présente invention, il est proposé un véhicule, hybride ou électrique, comprenant un système selon l'invention.

Le bus de communication peut être relié à un module, ou un boîtier, de gestion centrale, au sein du véhicule.

Le véhicule selon l'invention peut être tout type de véhicule transportant des personnes ou des objets, tel qu'une voiture, un bus, un car, un tram-bus, un bateau, un camion, un téléphérique, un ascenseur, un monte-charge, une grue, etc.

Suivant encore un autre aspect de la même invention, il est proposé une installation électrique comprenant un système selon l'invention.

Le bus de communication peut être relié à un module, ou un boîtier, de gestion centrale, au sein de l'installation.

Une telle installation électrique peut être une station de charge électrique pour véhicules de transport, électriques ou hybrides, ou une station d'alimentation électrique d'un bâtiment, d'un complexe ou d'un appareil électrique/électronique de communication.

Une telle installation électrique peut être une station de régulation ou de lissage, ou encore de stockage tampon, d'énergie électrique, par exemple fournie par un réseau électrique ou des moyens de production d'électricité. Une telle station de régulation ou de lissage permet de stocker de l'énergie électrique en surplus lors d'une période de faible consommation, respectivement de forte production, et de restituer l'énergie électrique stockée lors d'une période de forte consommation, respectivement de faible production.

Avantageusement, l'installation selon l'invention peut comprendre un moyen de production d'énergie électrique à partir d'une source renouvelable, tel qu'au moins un panneau solaire et/ou au moins une éolienne et/ou au moins une hydrolienne.

L'énergie produite par un tel moyen peut être utilisée pour recharger au moins une batterie.

Alternativement, ou en plus, au moins une batterie peut être rechargée depuis le secteur.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'une batterie selon l'invention ;
- la FIGURE 2 est une représentation schématique d'un exemple de réalisation non limitatif d'un procédé selon l'invention ;
- la FIGURE 3 est une représentation schématique des différentes configurations pouvant être obtenues avec la batterie de la FIGURE 1 ;
- la FIGURE 4 est une représentation schématique d'un exemple de réalisation non limitatif d'un système selon l'invention ;
- la FIGURE 5 est une représentation schématique d'un exemple de réalisation non limitatif d'un véhicule selon l'invention ; et
- la FIGURE 6 est une représentation schématique d'un exemple de réalisation non limitatif d'une installation électrique selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

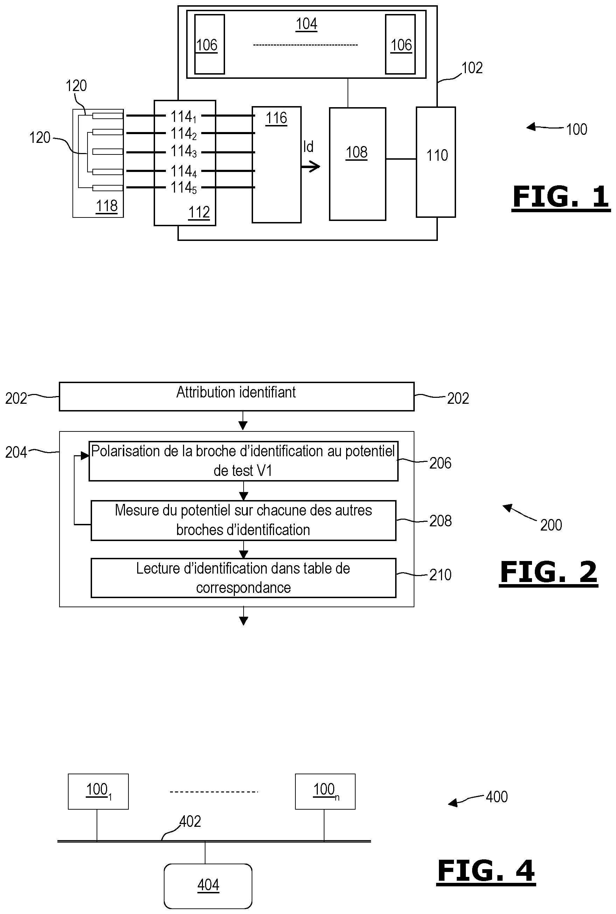

La FIGURE 1 est une représentation schématique d'un exemple de réalisation non limitatif d'une batterie selon l'invention.

La batterie 100, de la FIGURE 1, est rechargeable et peut être utilisée dans tout type d'application stationnaire ou non.

La batterie 100 comprend, dans une enveloppe 102, un ensemble 104 d'éléments de stockage d'énergie électriques 106, de même technologie, tel que par exemple des accumulateurs électrochimiques par effet capacitif.

La batterie 100 comprend en outre une électronique 108 de gestion de l'ensemble de stockage 104 et un port de communication 110 permettant à la batterie 100 de communiquer avec d'autres appareils au travers par exemple d'un bus de communication (non représenté).

La batterie 100 comprend en outre une interface d'identification 112 comprenant plusieurs broches d'identification 114i. Dans l'exemple représenté l'interface d'identification comprend cinq broches d'identification 114₁-114₅.

Chacune des broches d'identification 114₁-114₅ est reliée de manière individuelle et indépendante à un microcontrôleur, ou une puce électronique, 116. Le microcontrôleur 116 est agencé/programmé pour détecter si au moins deux des broches d'identification 114₁-114₅ sont rebouclées/reliées entre-elles, en entrée de l'interface d'identification 112.

Pour ce faire, le microcontrôleur 116 polarise la broche d'identification 114₁ à un potentiel de test V1 et mesure le potentiel sur chacune des autres broches d'identification 114₂-114₅. Si le potentiel de test V1 est retrouvé sur une autre des broches d'identification 114₂-114₅ alors cela indique que cette autre broche d'identification est rebouclée avec la broche d'indentification 114₁. Les mêmes opérations sont réalisées à tour de rôle, et individuellement, pour chacune des autres broches d'identification 114₂ à 114₅.

Le microprocesseur 116 est en outre configuré pour fournir une donnée d'identification « Id » en consultant une table de correspondance indiquant pour chaque combinaison de rebouclage(s) une donnée d'identification unique. Cette table de correspondance peut être mémorisée dans une mémoire (non représentée), interne ou externe au microprocesseur 116.

De plus, la batterie 100 peut être équipée d'un ou plusieurs moyens de moyen de rebouclage 118 pour relier au moins une des broches d'identification 114₁-114₅ avec au moins une autre des broches d'identification 114₁-114₅, en entrée de l'interface d'identification 112.

Dans l'exemple représenté, le moyen de rebouclage 118 se présente sous la forme d'un connecteur, mâle ou femelle, venant s'enficher avec l'interface d'identification 112, de manière amovible. Le connecteur 118 comporte au moins une liaison électrique interne 120 reliant, entre elles, au moins deux des broches d'identification 114₁-114₅ lorsqu'il est enfiché sur l'interface d'identification 112.

Bien entendu, le moyen de rebouclage 118 peut se présenter sous toute autre forme : un fil électrique soudé aux broches d'identification, plusieurs connecteurs individuels, etc.

Dans l'exemple donné, le potentiel de test V1 est le potentiel de masse électrique. Lorsqu'une broche d'identification est mise au potentiel de masse V1, alors chacune des autres broches d'identification est polarisée à un potentiel différent du potentiel de masse.

Alternativement, le potentiel de test V1 peut être un potentiel différent du potentiel de masse électrique. Dans ce cas, le potentiel de test V1 peut être délivré par une source électrique (non représenté) interne à la batterie 100. Alternativement, ce potentiel de test peut être un potentiel fourni à la batterie par une source externe, par exemple au travers du bus de communication relié à l'interface de communication 110.

Dans l'exemple représenté, l'interface d'identification 112 est une interface individuelle, et indépendante de toute autre interface. Alternativement, l'interface d'identification 112 peut être intégrée dans une autre interface de la batterie, telle que par exemple l'interface de communication 110, ou dans un autre connecteur de la batterie 100.

Dans l'exemple représenté, le microcontrôleur 116 utilisé pour l'identification est un microcontrôleur individuel et indépendant. Alternativement, le microcontrôleur 116 peut être intégré dans un autre microcontrôleur, dans une autre puce, ou plus généralement, dans une autre électronique. Par exemple, le microcontrôleur 116 peut être intégré dans, ou être, un microcontrôleur ou une puce faisant partie de l'électronique de gestion 108 de l'ensemble de stockage 104, ou d'une électronique existante dans la batterie 100.

La FIGURE 2 est une représentation schématique d'un exemple de réalisation non limitatif d'un procédé d'identification selon l'invention.

Le procédé 200 de la FIGURE 2 peut être mis en oeuvre pour une identifier une batterie selon l'invention, et en particulier la batterie 100 de la FIGURE 1.

Le procédé 200 comprend une étape 202 d'attribution d'un identifiant à une batterie. Cette étape 202 comprend en particulier un rebouclage d'au moins une broche d'identification de l'interface d'identification avec au moins une autre broche d'identification de ladite interface d'identification. Ce rebouclage peut être définitive ou amovible, par exemple grâce à un connecteur enfichable.

Puis le procédé 200 comprend une étape de lecture 204. L'étape de lecture 204 peut être réalisée une seule fois et l'identifiant déterminé peut être mémorisé pour être ensuite utilisée autant de fois que souhaitée. Alternativement, l'étape de lecture 204 peut être réalisée à chaque utilisation de l'identifiant de la batterie.

L'étape de lecture 204 comprend les étapes suivantes réalisées, pour chaque broche d'identification, à tour de rôle :
- une étape 206 de polarisation de la broche d'identification au potentiel électrique de test V1 ; et
- une étape 208 de détection de la présence, ou non, dudit potentiel de test V1 sur chacune des autres broches d'identification. Cette étape 208 peut être réalisée par mesure du potentiel électrique sur chacune des autres broches d'identification et comparaison du potentiel mesuré au potentiel de test V1.

Les étapes 206 et 208 ont pour but de détecter tous les rebouclages électriques existants entre les broches d'identification. Lorsque les étapes 206 et 208 ont été réalisées pour toutes les broches d'identification et que toutes les connexions électriques entre les broches d'identification ont été détectées, alors, lors d'une étape 210, un identifiant unique correspondant à la combinaison de rebouclage(s) détectée est lue dans une table de correspondance mémorisant, pour chaque combinaison de rebouclage(s), un identifiant unique.

L'identifiant de la batterie est alors déterminé.

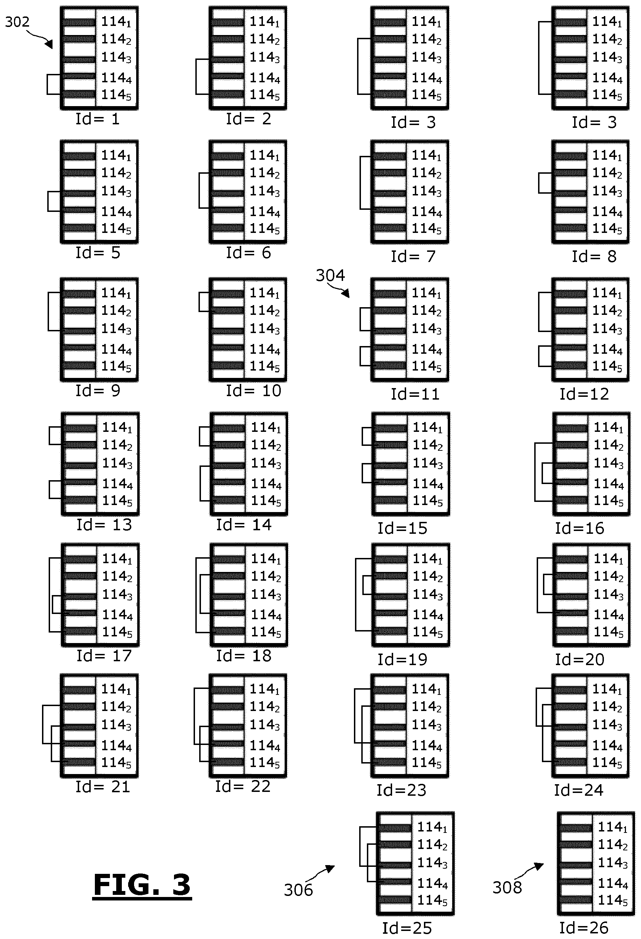

La FIGURE 3 donne des représentations schématiques de différentes combinaisons permettant d'obtenir différentes données d'identification, avec la batterie 100 de la FIGURE 1.

Pour chaque combinaison représentée sur la FIGURE 3, l'identifiant « Id » est indiqué en dessous de ladite combinaison.

Par exemple, pour la configuration 302, les broches d'identification 114₄ et 114₅ sont reliées entre-elles et se trouvent au même potentiel électrique. L'identifiant correspondant à cette combinaison de connexion est le « 1 ».

Pour la configuration 304, les broches d'identification 114₄ et 114₅ sont reliées entre-elles, et les broches d'identification 114₂ et 114s sont reliées entre-elles. La broche d'identification 114₁ n'est reliée à aucune broche d'identification. L'identifiant correspondant à cette combinaison de connexions est le 11.

Pour la configuration 306, les broches d'identification 114₁ et 114s sont reliées entre-elles, et les broches d'identification 114₂ et 114₄ sont reliées entre-elles. La broche d'identification 114₅ n'est reliée à aucune autre broche. L'identifiant correspondant à cette combinaison de connexions est le 25.

Pour la configuration 308, aucune broche d'identification n'est reliée à une autre broche d'identification. L'identifiant correspondant à cette combinaison est le 26.

La FIGURE 3 représente en tout 26 combinaisons différentes correspondant chacune à un identifiant unique.

La FIGURE 4 est une représentation schématique d'un exemple de réalisation non limitatif d'un système selon l'invention.

Le système 400 de la FIGURE 4 comprend une pluralité de batteries 100₁-100ₙ connectées à un bus de communication 402, par exemple numérique, tel que par exemple un bus de communication de type CAN.

Chaque batterie 100i est une batterie selon l'invention, et en particulier identique à la batterie 100 de la FIGURE 1.

Le système 400 peut en outre comprendre, de manière optionnelle, un appareil superviseur/contrôleur 404, également connecté au bus de communication 402. Le système 400 peut comprendre d'autres appareils que ceux représentés, reliés au bus 402.

Les batteries 100₁-100ₙ communiquent entre elles, ou avec le superviseur 404, au travers du bus de communication 402, sur lequel ils doivent s'identifier avec un identifiant. Pour ce faire, chaque batterie 100i détermine son propre identifiant, par exemple comme décrit en référence à la batterie 100 de la FIGURE 1, ou conformément au procédé 200 de la FIGURE 2.

L'interface d'identification 112 de chaque batterie 100i présente, par exemple, l'une des configurations représentées sur la FIGURE 3 de sorte que chaque configuration est utilisée une seule fois dans le système 400. Ainsi, il est possible d'identifier jusqu'à 26 appareils dans le système 400, tout en s'assurant que chaque appareil aura un identifiant unique dans le système 400.

Bien entendu, il est possible d'identifier plus, ou moins, de 26 appareils par exemple en augmentant, respectivement en diminuant, le nombre de broches d'identification dans l'interface d'identification 112.

L'identifiant de chaque batterie 100i peut être attribué par l'utilisateur, à la volée, par exemple en fonction de l'emplacement de ladite batterie 100i au sein de l'installation comprenant le système 400. Pour cela, l'utilisateur applique l'une des configurations de la FIGURE 3 aux broches d'identification 114₁-114₅ de l'interface 112 de la batterie 100i.

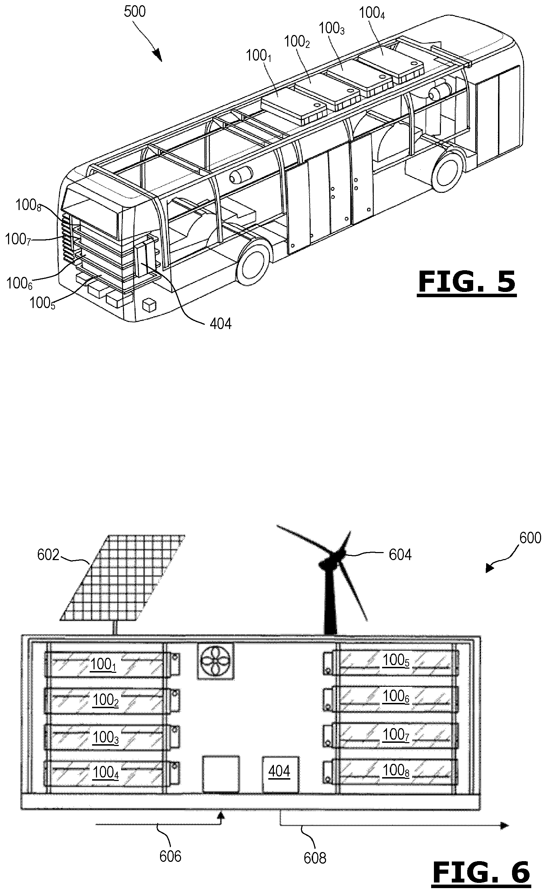

La FIGURE 5 est une représentation schématique d'un exemple non limitatif d'un véhicule électrique selon l'invention.

Le véhicule électrique 500, représenté sur la FIGURE 5, est un bus électrique comportant un ou plusieurs moteurs électriques (non représentés).

Le véhicule électrique 500 est équipé d'un système selon l'invention, tel que par exemple le système 400 de la FIGURE 4.

En particulier le véhicule 500 comprend huit batteries électriques rechargeables, 100₁-100₈, dont quatre sont disposées dans la paroi supérieure du véhicule 500 et quatre autres sont disposées dans un logement aménagé dans une paroi arrière du bus 500.

Le superviseur 404 peut par exemple être un boîtier de supervision des batteries, également appelé BMS.

Ainsi, lorsqu'une batterie doit être remplacée dans le véhicule 500, il est possible d'utiliser une batterie tout en ayant la possibilité de configurer à la volée l'interface d'identification 112 pour lui attribuer, ou imposer, à la volée, l'identifiant souhaité.

La FIGURE 6 est une représentation schématique d'un exemple non limitatif d'une installation d'alimentation électrique selon l'invention.

L'installation d'alimentation électrique 600, représentée sur la FIGURE 6, peut être une station de recharge électrique pour véhicules électriques tels que des bus électriques ou des voitures électriques, une installation d'alimentation électrique d'un bâtiment, d'un complexe tel qu'un terrain de football, d'un appareil de communication tel qu'une borne « WIFI » (marque déposée) ou une antenne, etc.

L'installation 600 est équipée d'un système selon l'invention, tel que par exemple le système 400 de la FIGURE 4.

En particulier l'installation 600, comprend huit batteries électriques rechargeables, 100₁-100₈.

Le superviseur 404 peut par exemple être un boîtier de supervision des batteries 100₁-100₈, également appelé BMS.

Il est possible d'utiliser un ou plusieurs moyens de production d'énergie électrique à partir d'une source renouvelable pour recharger les batteries 100₁-100₈, tels que par exemple des panneaux solaires 602 ou une ou des éoliennes 604.

Alternativement, ou en plus, chaque batterie 100i peut être rechargée depuis un réseau de distribution d'énergie électrique, matérialisé par la ligne référencée 606.

L'installation 600 permet d'alimenter une borne de charge, un complexe, et plus généralement une entité électrique, par l'intermédiaire d'une ligne électrique référencée 608.

Bien entendu, l'invention n'est pas limitée aux exemples détaillés ci-dessus et est définie par les revendications indépendantes.

## Revendications

1. Procédé (200) d'identification d'une batterie électrique (100) munie d'une interface électrique (112), dite d'identification, comportant plusieurs broches (114₁-114₅), dites d'identification, l'une au moins desdites broches d'identification (114₁-114₅) pouvant être reliée à au moins une autre desdites broches d'identification (114₁-114₅) pour attribuer un identifiant à ladite batterie (100), ledit procédé (200) comprenant une étape (204) de lecture dudit identifiant,
ledit procédé étant **caractérisé en ce que** l'étape (204) de lecture dudit identifiant comprenne les opérations suivantes réalisées, à tour de rôle, pour chacune desdites broches d'identification (114₁-114₅) :
- polarisation (206) de ladite broche d'identification à un potentiel électrique prédéterminé (V1), dit potentiel de test ; et
- détection (208) de la présence, ou non, dudit potentiel de test (V1) sur chacune des autres broches d'identification (114₁-114₅) ;
en vue d'identifier les broches d'identification qui sont rebouclées entre-elles, au sein de ladite interface d'identification (112).

2. Procédé (200) selon la revendication précédente, **caractérisé en ce qu'**il comprend en outre une étape (202) d'attribution d'un identifiant à la batterie électrique (100) par rebouclage d'au moins une desdites broches d'identification (114₁-114₅) avec au moins une autre desdites broches d'identification (114₁-114₅), préalablement à l'étape de lecture (204).

3. Procédé (200) selon l'une quelconque des revendications précédentes, **caractérisé en ce que** le potentiel de test (V1) est un potentiel électrique différent d'un potentiel de masse de la batterie électrique (100).

4. Procédé (200) selon la revendication précédente, **caractérisé en ce que** le potentiel de test (V1) est, ou est obtenu à partir d'un potentiel :
- fourni au sein de la batterie (100) ; ou
- reçu au niveau de l'interface d'identification (112).

5. Procédé (200) selon la revendication 1, **caractérisé en ce que** le potentiel de test est un potentiel de masse électrique utilisée au sein de la batterie (100).

6. Batterie électrique (100), en particulier rechargeable, comprenant :
- une interface électrique (112), dite d'identification, comportant plusieurs broches (114₁-114₅), dites d'identification, l'une au moins desdites broches d'identification (114₁-114₅) pouvant être reliée à au moins une autre desdites broches d'identification (114₁-114₅) pour attribuer un identifiant à la dite batterie (100) ; et
- au moins une électronique (116), dite de lecture, agencée pour mettre en oeuvre l'étape (204) de lecture du procédé (200) selon l'une quelconque des revendications précédentes.

7. Batterie (100) selon la revendication précédente, **caractérisée en ce qu'**elle comprend en outre au moins un moyen (118) de rebouclage électrique d'au moins une broche d'identification avec au moins une autre broche d'identification.

8. Batterie (100) selon la revendication précédente, **caractérisée en ce qu'**au moins un moyen de rebouclage (118) est démontable ou amovible.

9. Batterie (100) selon l'une quelconque des revendications 6 à 8, **caractérisée en ce que** l'électronique de lecture est un microprocesseur (116) relié aux broches d'identification (114₁-114₅), et programmé pour réaliser l'étape de lecture (204).

10. Batterie (100) selon l'une quelconque des revendications 6 à 9, **caractérisée en ce qu'**elle comprend une table de correspondance indiquant pour chaque configuration de liaison(s) de broches (114₁-114₅), une donnée d'identification.

11. Batterie (100) selon l'une quelconque des revendications 6 à 10, **caractérisée en ce que** les broches d'identification (114₁-114₅), et plus généralement l'interface d'identification (112), sont positionnées sur une face externe de la batterie

12. Batterie (100) selon l'une quelconque des revendications 6 à 11, **caractérisée en ce que** l'interface d'identification (112) se présente sous la forme d'une interface indépendante de toute autre interface.

13. Batterie (100) selon l'une quelconque des revendications 6 à 11, **caractérisée en ce que** l'interface d'identification (112) est intégrée dans une interface existante équipant la batterie (100).

14. Système (400) comprenant :
- un bus de communication (402), et
- au moins une batterie (100₁-100ₙ) selon l'une quelconque des revendications 6 à 13, reliée audit bus de communication (402).

15. Véhicule (500), électrique ou hybride, comprenant un système (400) selon la revendication précédente.

16. Installation (600) électrique comprenant un système (400) selon la revendication 14.

## Patentansprüche

1. Verfahren (200) zum Identifizieren einer elektrischen Batterie (100), die mit einer elektrischen Schnittstelle (112), der so genannten Identifikationsschnittstelle, versehen ist, die mehrere Stifte (114₁-114₅), so genannte Identifizierungsstifte, umfasst, wobei mindestens einer der Identifizierungsstifte (114₁-114₅) mit mindestens einem anderen der Identifizierungsstifte (114₁-114₅) verbunden werden kann, um der Batterie (100) eine Kennung zuzuweisen, das Verfahren (200) umfassend einen Schritt (204) des Lesens der Kennung, wobei das Verfahren
**dadurch gekennzeichnet ist, dass** der Schritt (204) des Lesens der Kennung die folgenden Vorgänge umfasst, die für jeden der Identifizierungsstifte (114₁-114₅) der Reihe nach durchgeführt werden:
- Vorspannen (206) des Identifizierungsstifts auf ein vorgegebenes elektrisches Potenzial (V1), das so genannte Testpotenzial; und
- Erkennen (208), ob das Testpotenzial (V1) an jedem der anderen Identifizierungsstifte (114₁-114₅) vorhanden ist oder nicht;
um die Identifizierungsstifte zu identifizieren, die innerhalb der Identifikationsschnittstelle (112) miteinander rückgekoppelt sind.

2. Verfahren (200) nach dem vorstehenden Anspruch,
**dadurch gekennzeichnet, dass** es außerdem einen Schritt (202) zum Zuweisen einer Kennung an die elektrische Batterie (100) durch Rückkoppeln mindestens eines der Identifizierungsstifte (114₁-114₅) mit mindestens einem anderen der Identifizierungsstifte (114₁-114₅) vor dem Leseschritt (204) umfasst.

3. Verfahren (200) nach einem der vorstehenden Ansprüche,
**dadurch gekennzeichnet, dass** das Testpotenzial (V1) ein elektrisches Potenzial ist, das sich von einem Massepotenzial der elektrischen Batterie (100) unterscheidet.

4. Verfahren (200) nach dem vorstehenden Anspruch,
**dadurch gekennzeichnet, dass** das Testpotenzial (V1) besteht oder erhalten wird aus einem Potenzial:
- das innerhalb der Batterie (100) bereitgestellt ist; oder
- das an der Identifikationsschnittstelle (112) empfangen wird.

5. Verfahren (200) nach Anspruch 1, **dadurch gekennzeichnet, dass** das Testpotenzial ein elektrisches Massepotenzial ist, das innerhalb der Batterie (100) verwendet wird.

6. Elektrische Batterie (100), insbesondere wiederaufladbare, umfassend:
- eine elektrische Schnittstelle (112), die so genannte Identifikationsschnittstelle, umfassend mehrere Stifte (114₁-114₅), die so genannten Identifizierungsstifte, wobei mindestens einer der Identifizierungsstifte (114₁-114₅) mit mindestens einem anderen der Identifizierungsstifte (114₁-114₅) verbunden werden kann, um der Batterie (100) eine Kennung zuzuweisen; und
- mindestens eine Elektronik (116), die so genannte Leseelektronik, die so beschaffen ist, dass sie den Schritt (204) des Lesens des Verfahrens (200) nach einem der vorstehenden Ansprüche ausführt.

7. Batterie (100) nach dem vorstehenden Anspruch,
**dadurch gekennzeichnet, dass** sie außerdem mindestens ein Mittel (118) zum elektrischen Rückkoppeln mindestens eines Identifizierungsstifts mit mindestens einem anderen Identifizierungsstift umfasst.

8. Batterie (100) nach dem vorstehenden Anspruch,
**dadurch gekennzeichnet, dass** mindestens ein Mittel zum Rückkoppeln (118) demontierbar oder abnehmbar ist.

9. Batterie (100) nach einem der Ansprüche 6 bis 8,
**dadurch gekennzeichnet, dass** die Leseelektronik ein Mikroprozessor (116) ist, der mit den Identifizierungsstiften (114₁-114₅) verbunden ist und so programmiert ist, dass er den Leseschritt (204) ausführt.

10. Batterie (100) nach einem der Ansprüche 6 bis 9,
**dadurch gekennzeichnet, dass** sie eine Zuordnungstabelle umfasst, die für jede Konfiguration der Stiftverbindung(en) (114₁-114₅) ein Identifikationsdatenelement angibt.

11. Batterie (100) nach einem der Ansprüche 6 bis 10,
**dadurch gekennzeichnet, dass** die Identifizierungsstifte (114₁-114₅) und allgemeiner die Identifikationsschnittstelle (112) auf einer Außenseite der Batterie positioniert sind

12. Batterie (100) nach einem der Ansprüche 6 bis 11,
**dadurch gekennzeichnet, dass** die Identifikationsschnittstelle (112) in Form einer Schnittstelle vorliegt, die von jeder anderen Schnittstelle unabhängig ist.

13. Batterie (100) nach einem der Ansprüche 6 bis 11,
**dadurch gekennzeichnet, dass** die Identifikationsschnittstelle (112) in eine bestehende Schnittstelle, mit der die Batterie (100) ausgestattet ist, integriert ist.

14. System (400), umfassend:
- einen Kommunikationsbus (402), und
- mindestens eine Batterie (100₁-100ₙ) nach einem der Ansprüche 6 bis 13, die mit dem Kommunikationsbus (402) verbunden ist.

15. Fahrzeug (500), elektrisch oder hybrid, umfassend ein System (400) nach dem vorstehenden Anspruch.

16. Elektrische Anlage (600), umfassend ein System (400) nach Anspruch 14.

## Claims

1. A method (200) for identifying an electrical battery (100) equipped with an electrical interface (112), called identification interface, containing several pins (114₁-114₅), called identification pins, wherein at least one of said identification pins (114₁-114₅) can be connected to at least another one of said identification pins (114₁-114₅) in order to allocate an identifier to said battery (100), said method (200) comprising a step (204) of reading said identifier, said method being **characterized in that** the step (204) of reading said identifier comprises the following operations, performed in turn for each of said identification pins (114₁-114₅):
- polarizing (206) said identification pin to a predetermined electric potential (V1), called test potential; and
- detecting (208) the presence, or not, of said test potential (V1) on each of the other identification pins (114₁-114₅);
for the purpose of identifying the identification pins that are looped back to one another within said identification interface (112).

2. The method (200) according to the preceding claim, **characterized in that** it moreover comprises a step (202) of allocating an identifier to the electric battery (100) by loopback of at least one of said identification pins (114₁-114₅) to at least another one of said identification pins (114₁-114₅), prior to the reading step (204).

3. The method (200) according to any one of the preceding claims, **characterized in that** the test potential (V1) is an electric potential different from a ground potential of the electric battery (100).

4. The method (200) according to the preceding claim, **characterized in that** the test potential (V1) is, or is obtained from, a potential:
- provided within the battery (100); or
- received at the identification interface (112).

5. The method (200) according to claim 1, **characterized in that** the test potential is an electric ground potential used within the battery (100).

6. An electrical battery (100), in particular rechargeable, comprising:
- an electrical interface (112), called identification interface, containing several pins (114₁-114₅), called identification pins, wherein at least one of said identification pins (114₁-114₅) can be connected to at least another one of said identification pins (114₁-114₅) in order to allocate an identifier to said battery (100); and
- at least one electronic unit (116), called reading electronic unit, arranged to implement the reading step (204) of the method (200) according to any one of the preceding claims.

7. The battery (100) according to the preceding claim, **characterized in that** it comprises moreover at least one means (118) of electrical loopback of at least one identification pin to at least one other identification pin.

8. The battery (100) according to the preceding claim, **characterized in that** at least one loopback means (118) can be dismantled or removed.

9. The battery (100) according to any one of claims 6 to 8, **characterized in that** the reading electronic unit is a microprocessor (116), connected to the identification pins (114₁-114₅), and programmed to perform the reading step (204).

10. The battery (100) according to any one of claims 6 to 9, **characterized in that** it comprises a lookup table indicating an item of identification data for each configuration of pin connection(s) (114₁-114₅).

11. The battery (100) according to any one of claims 6 to 10, **characterized in that** the identification pins (114₁-114₅), and more generally the identification interface (112), are positioned on an external face of the battery.

12. The battery (100) according to any one of claims 6 to 11, **characterized in that** the identification interface (112) has the form of an interface independent of any other interface.

13. The battery (100) according to any one of claims 6 to 11, **characterized in that** the identification interface (112) is integrated in an existing interface with which the battery (100) is equipped.

14. A system (400) comprising:
- a communication bus (402) and
- at least one battery (100₁-100ₙ) according to any one of claims 6 to 13, connected to said communication bus (402).

15. A vehicle (500), electric or hybrid, comprising a system (400) according to the preceding claim.

16. An electrical installation (600) comprising a system (400) according to claim 14.
